# EUROPÄISCHE PATENTANMELDUNG

(11) **EP 2 437 027 A2**
(43) Veröffentlichungstag der Anmeldung: **04.04.2012**
(21) Anmeldenummer: 11183325.7
(22) Anmeldetag: 29.09.2011
(51) Int. Cl.: G01B 11/25, G02B 21/00

(54) **Vorrichtung und Verfahren zur dreidimensionalen optischen Abtastung einer Probe**

(30) Priorität: 03.10.2010 DE 102010047350
(71) Anmelder: Confovis GmbH, 07745 Jena (DE)
(72) Erfinder: Schwertner, Dr. Michael, 07743 Jena (DE)
(74) Vertreter: Kruspig, Volkmar

(57) **Zusammenfassung**

Die Erfindung betrifft eine Vorrichtung sowie ein Verfahren zur dreidimensionalen optischen Abtastung einer Probe. Der Abtastprozess erlaubt es, dreidimensionale Daten der zu untersuchenden Probe zu erhalten, ähnlich dem Verfahren der Konfokalen Mikroskopie, jedoch unter Nutzung von strukturierter Beleuchtung. Ein besonderer Vorteil besteht darin, dass die axiale Abtastung sowie die Laterale Abtastung durch einen einzigen Aktuator vorgenommen werden. Durch die Anwendung eines Weitfeldverfahrens und die Möglichkeit zur Abtastung mit kontinuierlicher Geschwindigkeit können hohe Abtastraten erzielt werden. Des Weiteren betrifft die Erfindung die Ermöglichung eines kontinuierlichen Scanprozesses zur kontinuierlichen Abtastung von Flächen, welche größer als das Gesichtsfeld der genutzten Optik sind. Hierfür wird eine besonders effiziente Form der Abtastung vorgeschlagen, bei welcher durch Verkippung der Fokusebene in Bezug auf die Scanbewegung mit nur einem Aktuator gleichzeitig eine Tiefenabtastung der Probe erzielt wird.

## Beschreibung

Die Erfindung betrifft eine Vorrichtung sowie ein Verfahren zur dreidimensionalen optischen Abtastung einer Probe, insbesondere von Zylinder-Innenflächen oder Zylinder-Segmenten.

In der industriellen Prozess- und Qualitätskontrolle sowie in der biomedizinischen Bildgebung ist es oft notwendig, dreidimensionale Daten von Objekten zu gewinnen. Somit können Qualitätsprobleme erkannt oder biomedizinische Strukturen analysiert werden.

Für die Lösung dieser Aufgabe sind eine Vielzahl von optischen Verfahren und Vorrichtungen bekannt, wie zum Beispiel Interferometrie, Triangulationsverfahren, Konfokale Mikroskopie, strukturierte Beleuchtung, Weisslichtinterferometrie und Fokusvariation. Jedes dieser Verfahren hat besondere Vor- und Nachteile.

Der Vorteil der hier vorgeschlagenen Lösung, welche auf einer Art der strukturierten Beleuchtung basiert, liegt in einer hohen Abtastgeschwindigkeit und einem relativ einfachen optischen Aufbau.

Da es sich um ein optisches Abtastverfahren handelt, soll im Folgenden kurz auf die wichtigsten Verfahren zur optischen dreidimensionalen Abtastung eingegangen werden. Ein Überblick befindet sich im Handbuch zur Industriellen Bildverarbeitung, Fraunhofer Allianz Vision, 2007, ISBN 978-3-8167-7386-3 [1].

Bei der optischen Triangulation sind Beleuchtung und Detektion aus unterschiedlichen Richtungen auf das Objekt gerichtet. Die Höhe der Probe macht sich durch einen seitlichen Versatz der Beleuchtungsverteilung bemerkbar, welcher detektiert und in eine Höheninformation umgesetzt wird. Es gibt eine Vielzahl von Verfahren und Anordnungen der strukturierten Beleuchtung, welche auf Triangulation basieren. Diese werden manchmal auch als Streifenprojektion bezeichnet und haben getrennte Optiken für Beleuchtung und Detektion ([1] ab S. 220). Auf Triangulation basierende Verfahren der strukturierten Beleuchtung müssen klar vom hier beschriebenen Verfahren unterschieden werden, da sie auf einem anderen physikalischen Prinzip beruhen.

Die Literaturstellen
- M.A.A. Neil, Rimas Juskaitis and T. Wilson: "Method of obtaining optical sections using structured light in a conventional microscope", Optics Letters, Vol. 22, No. 24, p. 1905, 1997 [2]
- Wilson et al., US 6376818 (2002), "Microscopy Apparatus and Method" [3]
- Gerstner et al., WO 02/12945 (2002), "Assembly for Increasing the Depth Discrimination of an Optical Imaging System" [4]
- DE 10 2007 018 048 A1 [5]
   beziehen sich auf strukturierte Beleuchtung, welche keine Triangulation verwendet. Dies ist die für die vorliegende Erfindung relevante Art der strukturierten Beleuchtung. Hier werden Projektion der Beleuchtungsverteilung sowie Detektion durch die gleiche Optik vorgenommen. Die in die Probe abgebildete periodische Lichtverteilung wird hier im typischen Fall durch Abbildung einer Gittermaske realisiert. Die modulierte Lichtverteilung markiert sozusagen die Fokusebene. Man macht sich hier zu Nutze, dass die Modulationstiefe der Lichtverteilung am Ort des Fokus am höchsten ist. Nach Aufnahme einer Sequenz bestehend aus mehreren Beleuchtungsmustern mit verschiedenen Phasenlagen der periodischen Gitterstruktur kann durch mathematische Verfahren die Modulationstiefe bestimmt und die unerwünschte Gitterstruktur aus den Bildern entfernt werden. Als Ergebnis erhält man eine Abbildung, einen optischen Schnitt, welcher mit der Abbildung eines Konfokalmikroskopes vergleichbar ist. Informationen von Außerhalb der Fokusebene werden hier unterdrückt. Der Vorteil der Strukturierten Beleuchtung besteht darin, dass man im Vergleich zum etablierten Konfokalmikroskop keinen Laser benötigt und es sich um ein schnelles Weitfeldverfahren handelt.

Es sind verschiedene Ausführungen der nicht triangulierenden strukturierten Beleuchtung in der Literatur beschrieben, auf welche im Folgenden näher eingegangen werden soll.

In [2] und [3] wird ein Gitter, welches sich in einer zur Probe konjugierten Ebene liegt, durch einen Piezoaktuator bewegt und somit die Phase der projizierten Lichtstruktur geändert. Die in [4] offenbarte Anordnung nutzt für die gleiche Aufgabe der Änderung der Phase der projizierten periodischen Lichtverteilung eine planparallele Platte, welche durch Verkippung das Bild des Gitters seitlich verschiebt. In [5] werden die verschiedenen Phaseneinstellungen der Beleuchtungsverteilung auf der Probe durch das elektronische Schalten von Lichtwegen erzeugt. Grundsätzlich wird in allen genannten Anordnungen nur eine Fokusebene senkrecht zur optischen Achse abgetastet und die Anordnung weist einen zweiten Aktuator für die Fokussierung auf (neben dem Aktuator / Schalter zur Verstellung der Phasenlage der projizierten Struktur). Der Fokusaktuator kann dabei die Probe selbst oder aber das Objektiv bewegen.

Die Vorliegende Erfindung ermöglicht die laterale Abtastung (Erweiterung des Gesichtsfeldes der Optik), die axiale Abtastung (Fokussierung) sowie die Variation der Phasenlage der Beleuchtungsstruktur mit nur einem einzigen Aktuator und verringert somit deutlich den technischen Aufwand im Vergleich zum Stand der Technik.

Die hier dargelegte Lösung basiert auf einer Art der strukturierten Beleuchtung. Es wird eine einzige Optik für die Beleuchtung des zu untersuchenden Objektes sowie die Aufnahme des vom Objekt zurückgesendeten Lichtes verwendet. Die offenbarte Methode fällt deshalb nicht in die Kategorie der triangulierenden Verfahren.

Bei dem vom Objekt detektierten Licht kann es sich zum Beispiel im reflektiertes Licht, gestreutes Licht, Fluoreszenzlicht oder Lumineszenzlicht handeln. Im Gegensatz zu den bekannten Verfahren entsprechend dem Stand der Technik [2, 3, 4, 5] ist jedoch nur ein einziger Aktuator notwendig, um Phasenlage der projizierten Struktur und die Fokussierung einzustellen sowie die laterale Objektabtastung durchzuführen. Dadurch ergibt sich eine deutliche Vereinfachung der Gesamtanordnung. Zusätzlich ermöglicht die Anordnung die schnelle 3D-Abtastung in einem kontinuierlichen Scanprozeß. Es können große bzw. lange Messfelder abgedeckt werden.

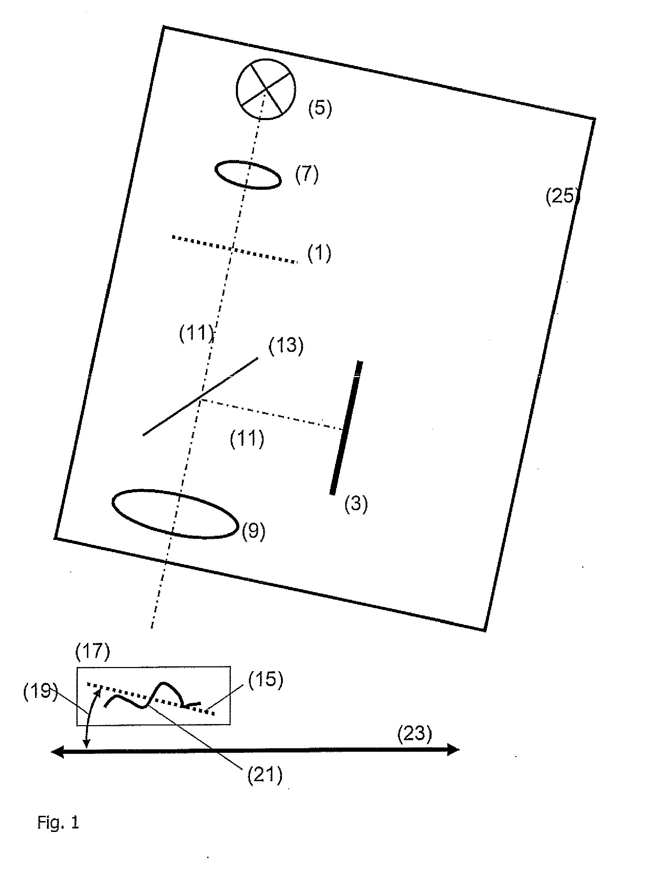

Im Folgenden soll das Prinzip an einem Ausführungsbeispiel erläutert werden. Eine erfindungsgemäße Anordnung ist in Fig. 1 dargestellt. Eine periodische Struktur (1) befindet sich in einer konjugierten Ebene zu einem Detektor (3), welcher ein Zeilen- oder Flächendetektor, wie zum Beispiel ein CCD Array oder ein CMOS Sensor-Array sein kann. Falls es sich um einen Zeilensensor handelt, ist seine längere Achse in Abtastrichtung (23) orientiert. Die periodische Struktur (1) kann eine Periodizität in einer oder mehreren Richtungen aufweisen, wobei Periodizität in Abtastrichtung (23) existiert. Im typischen Fall ist (1) ein Substrat mit Bereichen verschiedener Transparenz für das Licht der Lichtquelle (5).

Die Lichtquelle (5) beleuchtet die periodische Struktur (1), hierzu kann eine Beleuchtungsoptik (7) genutzt werden. Die Lichtquelle (5) kann die periodische Struktur (1) während des Scanvorgangs konstant oder stroboskopisch (gepulst, mit dem Abtastvorgang synchronisiert) beleuchten. Bei (5) kann es sich ebenfalls um den Ausgang einer Lichtleitoptik handeln, welche mit einer Lichtquelle verbunden ist. Das Objektiv (9) bildet die periodische Struktur (1) in die dazu konjugierte Probenebene (15) ab. Das von der Probe ausgesendete Licht wird über das Objektiv (9) sowie den Strahlteiler (13) auf den Detektor abgebildet, wobei Sensorebene des Detektors (3), die Probenebene (11) sowie die Ebene der periodischen Struktur (1) zueinander konjugiert sind. Der Strahlteiler (13) kann zu Beispiel ein dichroitischer Spiegel oder ein halbtransparenter Teilerspiegel sein. Die optische Achse der Anordnung ist mit (11) gekennzeichnet.

Die Probenebene (15) innerhalb des Objektraumes (17), welche die Probe (21) enthält, wird auf den Detektor (3) abgebildet. Die Elemente (1) bis (13) bilden den Scankopf (25), wobei sich die Probe (21) und der Scankopf (25) relativ zueinander in Abtastrichtung (23) bewegen. Dies kann durch eine Bewegung des Scankopfes (25) und/oder der Probe (21) realisiert werden. Wichtig ist hierbei, dass die Abtastrichtung (23) und die abgetastete Probenebene (15) in einem Winkel (19) zueinander stehen, welcher ungleich Null Grad ist.

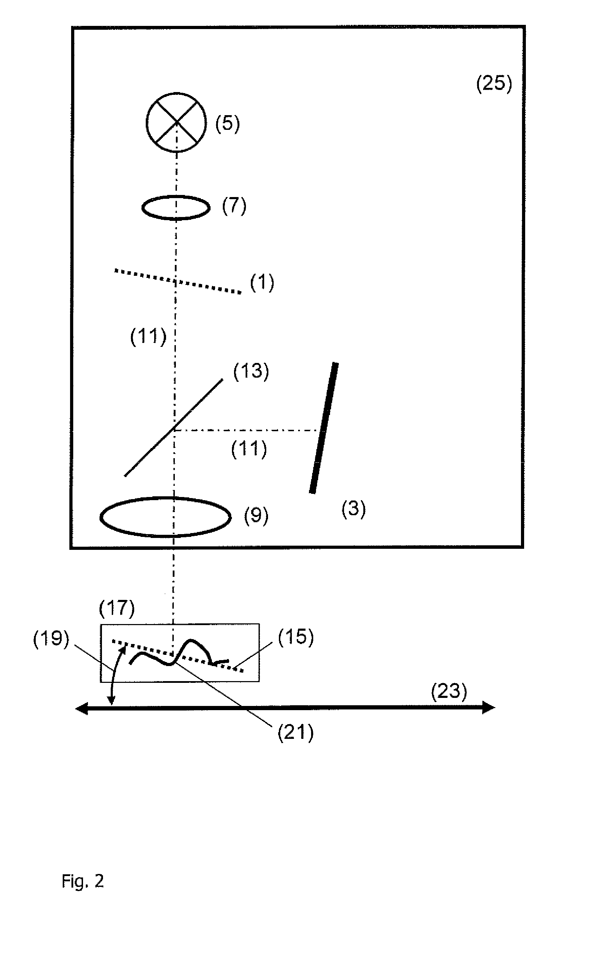

Ein weiteres Ausführungsbeispiel für eine erfindungsgemäße Anordnung ist in Figur 2 dargestellt. Die Anordnung wurde im Vergleich zu Fig. 1 dahingehend modifiziert, dass die optische Achse (11) senkrecht zur Abtastrichtung steht. Dafür sind die periodische Struktur (1) sowie der Detektor (3) in Bezug auf die optische Achse geneigt, woraus sich ebenfalls eine erfindungsgemäße Neigung (19) der Probenebene (15) in Bezug auf die Abtastrichtung (23) ergibt.

In Fig. 2 steht die optische Achse des Objektivs (9) im Wesentlichen senkrecht zur Abtastrichtung (23).

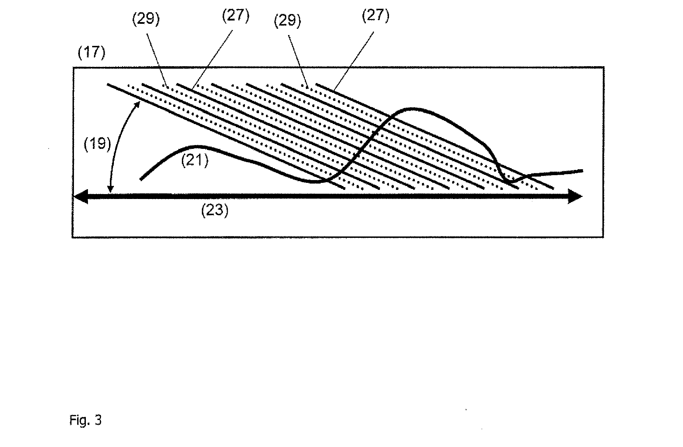

Der Abtastvorgang unter Nutzung der strukturierten Beleuchtung soll im Folgenden näher anhand von Fig. 3 erläutert werden. Während des Abtastvorgangs wird eine Relativbewegung zwischen Scankopf (25) und der Probe (21) durchgeführt, welche sich im Objektraum (17) befindet. Diese Relativbewegung kann in Form von Schritten oder als kontinuierliche Bewegung ausgeführt sein. Die Ebenen (27) bzw. (29) markieren diejenigen Positionen im Objektraum, an welchen sich die zum Detektor (3) konjugierte Probenebene (15) während der Aufzeichnung von Daten durch den Detektor (3) befand. Die Ebenen (27) bzw. (29) müssen sich dabei nicht in äquidistanten Abständen entlang der Abtastrichtung (23) befinden.

Eine Relativbewegung des Scankopfes (25) in Abtastrichtung (23) in Bezug auf die Probe (21) verändert die lokale Phase der auf die Probe projizierten periodischen Struktur (1) innerhalb des Koordinatensystems der Probe (21). In einem typischen Fall ist die periodische Struktur ein Gitter mit einer Periodizität in Abtastrichtung (23). Bei vorgegebener periodischer Beleuchtungsstruktur bzw. Gitter kann erfindungsgemäß durch eine Drehung dieser Struktur in der Fokusebene um die Optische Achse die Größe des Phasenschrittes im Verhältnis zur Bewegung in Abtastrichtung eingestellt bzw. justiert werden. Für das Beispiel eines Liniengitters (Gitter mit Periodizität in einer Richtung) wird der größte Phasenschritt im Verhältnis zur Lateralbewegung erzielt, wenn die Periodizität des Gitters in Richtung der Abtastrichtung (23) orientiert ist. Ein kleinerer Phasenschritt der periodischen Struktur im Verhältnis zur Lateralbewegung lässt sich dagegen erzielen, wenn die Periodizität des Gitters einen Winkel (ungleich 90 Grad) mit der Abtastrichtung einschließt. Die Variation dieses Winkels kann als Einstellparameter des Systems genutzt werden.

Bei einer Relativbewegung des Scankopfes (25) in Abtastrichtung (23) in Bezug auf die Probe wird gleichzeitig, mit der Abtastbewegung einhergehend, wird die laterale Position der Probe (21) im Koordinatensystem des Detektors (3) geändert. Der Abtastvorgang wird erfindungsgemäß derart abgestimmt, dass innerhalb von Gruppen von Aufnahmen des Detektors jeweils eine durch die Abtastschrittweite bestimmte Phasenbeziehung der projizierten periodischen Struktur (1) im Koordinatensystem der Probe (21) zueinander existiert. In Figur 3 besteht eine solche Gruppe von Aufnahmen aus zwei Elementen (27) und (29), welche durch ihre Linienarten in der Figur unterscheidbar sind. Es können jedoch auch mehr Elemente in einer Gruppe enthalten sein. Ein Verfahren zur strukturierten Beleuchtung, welches mit einer Beleuchtungssequenz bestehend aus zwei Phasenschritten einer periodischen Struktur arbeitet, ist in [5] zu finden, während die Literaturstellen [2,3,4] mit mindestens je drei Phasenschritten arbeiten.

Die Schrittweite der Abtastschritte kann innerhalb einer Aufnahmegruppe klein gegenüber den Schrittweiten zwischen den einzelnen Gruppen sein. Durch diese Konfiguration wird erreicht, dass sich die Einzelaufnahmen innerhalb der Gruppe im Wesentlichen durch ihre Phasenlage der projizierten periodischen Struktur unterscheiden, während die axiale Abweichung (Richtung senkrecht zur Abtastrichtung (23)) zwischen den Einzelaufnahmen vernachlässigt werden kann.

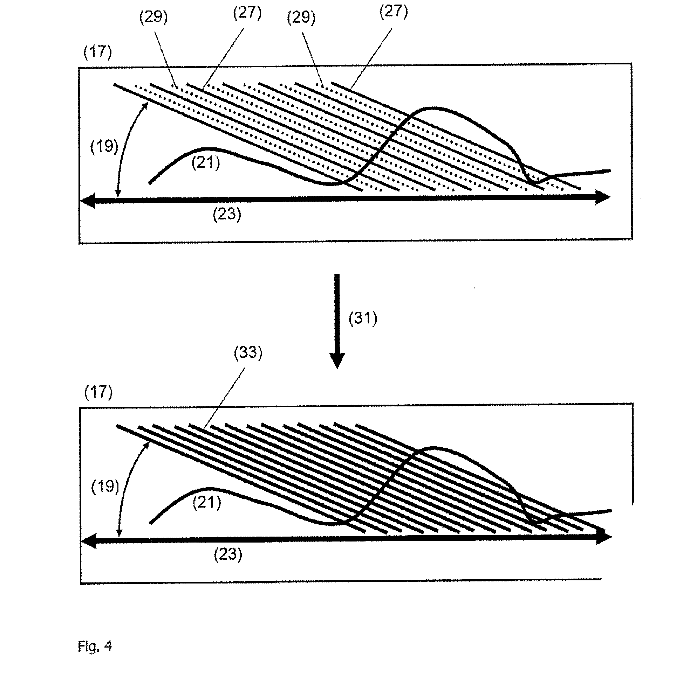

Im weiteren Verlauf der Betrachtung soll der Vorgang zur Gewinnung dreidimensionaler Daten aus den entsprechend der bisherigen Beschreibung aufgenommenen Daten erläutert werden. In Fig. 4 ist der Prozess der Berechnung von optischen Schnittbildern illustriert. Die aufgenommenen Daten werden zu einer Sequenz aus Einzelbildern mit verschiedenen Phasenlagen gruppiert. Eine solche Gruppe besteht im oberen Teil von Fig. 4 dabei jeweils aus den Elementen (27) und (29).

Da die Phasenverschiebung der periodischen Struktur im Koordinatensystem der Probe gleichzeitig auch zu einem seitlichen Versatz der Probenabbildung im Detektorkoordinatensystem führt, wird dieser Versatz durch eine Translationstransformation im Detektorkoordinatensystem innerhalb jeder Gruppe von Einzelbildern rückgängig gemacht.

In einem folgenden Rechenschritt (31), welcher zum Beispiel auf einem in [2, 3, 4, 5] Rechenverfahren basieren kann, werden die der Translationstransformation unterzogenen Daten weiter verarbeitet. Aus einer Gruppe von transformierten Teilbildern wird jeweils ein optischer Schnitt (33) erzeugt. Die optischen Schnitte sind im Objektraum (17) wie im unteren Teil von Fig. 4 dargestellt angeordnet. In einem optischen Schnitt sind Bildinformationen von Außerhalb der Fokusebene unterdrückt. Der Stapel optischer Schnitte hat ähnliche Eigenschaften wie ein Bildstapel, der von einem Konfokalmikroskop erzeugt wurde und kann dementsprechend weiter verarbeitet werden.

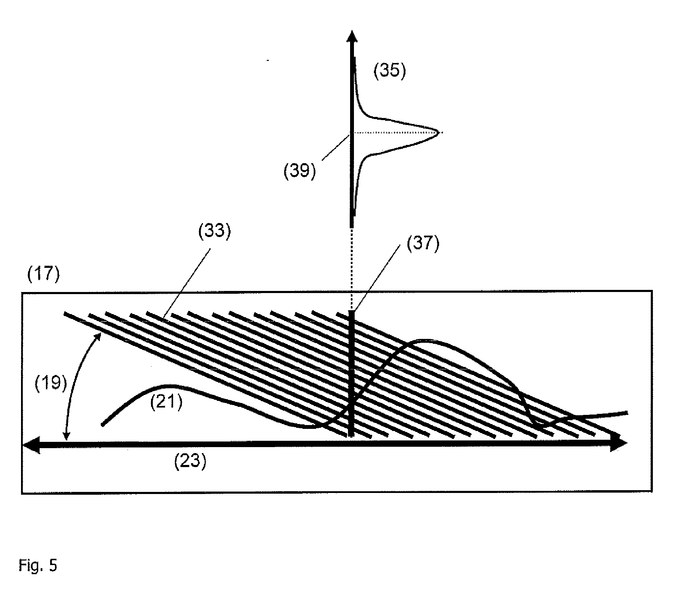

Die Gewinnung von Höhendaten (einem Oberflächenprofil der Probe) aus dem im unteren Teil von Fig. 4 dargestellten Stapel optischer Schnitte (33) soll für die Anwendung in der Profilometrie mit Hilfe von Fig. 5 an einem Beispiel erläutert werden. Aus dem Stapel der optischen Schnitte (33) wird entlang der Linie (37), welche senkrecht zur Abtastrichtung (23) liegt, eine Intensitätsverlaufsfunktion (35) extrahiert. Da das Signal in den optischen Schnitten am Ort der Objektoberfläche maximal wird, kann die Höhe durch Bestimmung der Position des Peaks (39) ermittelt werden. Durch Wiederholung dieser Operation und mehrfache Extraktion von Intensitätsverlaufsfunktionen an verschiedenen Orten des Stapels optischer Schnitte und Peak-fitting kann ein Höhenprofil der Probe erzeugt werden.

Im Folgenden wird die bereits im vorangegangen Teil der Beschreibung enthaltene und dort mit der strukturierten Beleuchtung gekoppelte axiale Abtastung durch laterale Bewegung einer geneigten Fokusebene weiter erläutert, die Kombination mit anderen Verfahren zur Schnittbildgebung beschrieben und auf den Fall der Abtastung von gekrümmten Flächen erweitert, wie zum Beispiel Zylinder.

Das erfindungsgemäße Prinzip kann auch mit der strukturierten Beleuchtung wie in [5] beschrieben kombiniert werden, wobei die Erzeugung der für die strukturierte Beleuchtung erforderlichen Phasenschritte hier durch schnelles elektronisches Schalten von Lichtquellen implementiert ist. Dies ist ein Unterschied zur bisher ebenfalls beschriebenen Erzeugung der Phasenschritte durch Bewegung in Abtastrichtung (23). Für den Fall einer Periodizität der Beleuchtungsstruktur in nur einer Richtung wird diese vorzugsweise senkrecht zur Abtastrichtung (23) orientiert.

Das im weiteren näher beschriebene Verfahren zur Tiefenabtastung und lateralen Abtastung in einem Vorgang kann neben der strukturierten Beleuchtung auch mit anderen Verfahren und Vorrichtungen zur Schnittbildgebung genutzt werden, wie zum Beispiel der eingangs beschriebenen klassischen Konfokalmikroskopie.

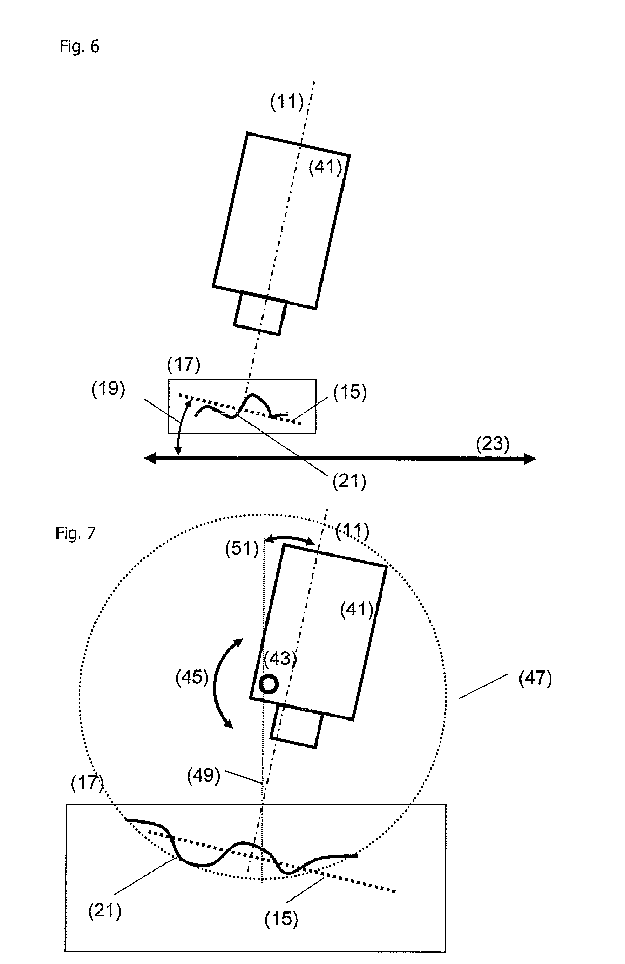

Zur Erläuterung wird zunächst wie in Fig. 6 dargestellt, das Objektiv (41) betrachtet, welches an eine Vorrichtung zur optischen Schnittbildgebung gekoppelt ist (Vorrichtung nicht illustriert). Dies bedeutet, dass die Vorrichtung nur Informationen (z. B. Reflexionslicht, Fluoreszenzlicht) aufzeichnet, welche aus einer dünn begrenzten Fokusebene, der abgetasteten konjugierten Probenebene (15), stammen. Umgangssprachlich werden optische Schnitte oft auch als Konfokalbilder bezeichnet. Die in der Scan-Vorrichtung benutzte Technologie kann dabei strukturierte Beleuchtung, konfokale Punktscanner, Linienscanner oder spinning-disc Anordnungen (Nipkow-Scheiben) beinhalten.

Entsprechend dem Stand der Technik werden Flächen mit größerer Ausdehnung als dem Gesichtsfeld üblicherweise durch den axialen Scan (Z-Scan) an mehreren Probenstellen und die darauffolgende Zusammenfügung der gemessenen Bilddaten erreicht. Dies wir oft als Stitching-Prozedur bezeichnet. Hier ergibt sich der Nachteil, dass eine gewisse Überlappung der einzelnen Datensätze im Randbereich zur akkuraten Zusammenfügung vorhanden sein muss. Zusätzlich benötigt man zwei Aktuatorsysteme: ein erstes für die Z-Bewegung und ein zweites für die laterale Bewegung (typisch: X/Y).

Die vorliegende und im Folgenden beschriebene Erfindung ermöglicht die Abtastung von Bereichen größer als dem Gesichtsfeld der Optik, wobei weniger Aktuatorsysteme als beim Stand der Technik benötigt werden. Zusätzlich müssen im Scanvorgang weniger Randbereiche doppelt abgetastet werden und der Vorgang kann in einem schnellen, kontinuierlichen Prozess (ohne Richtungsumkehr des nun nicht mehr benötigten Fokus-Aktuators) realisiert werden.

Für die Abtastung annähernd gerader Flächen ist das Prinzip im unteren Teil von Fig. 4 ersichtlich. Durch Neigung der mit der Scan-Vorrichtung aufgezeichneten Schnittbildebenen (33) um den Winkel (19) in Bezug auf die Abtastrichtung (23) wird der Objektraum (17) mit Schnittbildebenen durchsetzt, woraus sich später das Oberflächenprofil der Probe (21) wie in Fig. 5 erläutert bestimmen lässt. Durch geeignete Wahl des Winkels (19), der die Neigung der Fokusebene beschreibt, kann die abgetastete Raumtiefe (gemessen senkrecht zur Abtastrichtung) eingestellt werden.

Im Folgenden wird dargelegt, wie das erfindungsgemäße Prinzip zusätzlich auch auf die Abtastung von gekrümmten Oberflächen (wie zum Beispiel Zylindern oder Zylinder-Segmenten) angewendet werden kann. Ziel der Anordnung ist die Vermessung der lokalen Oberflächeneigenschaften der auf einer größeren Skala gekrümmten Zylinderoberfläche bzw. Hüllfläche. Typische Anwendungen sind die Vermessung der Innenflächen von Motor-Zylindern oder anderen Bohrungen und gehohnten Strukturen.

In Fig. 7 ist das Objektiv (41) mit der optischen Achse (11) um den Punkt (43) drehbar gelagert angeordnet. Eine an das Objektiv gekoppelte Scan-Vorrichtung (zum Beispiel strukturierte Beleuchtung entsprechend [5]) wurde nicht mitgezeichnet. In typischen Anordnungen entsprechend der Erfindung ist die optische Achse (11) in eine Richtung entlang der Zylinder-Achse gefaltet, um die erwähnte Vorrichtung zur Schnittbilderzeugung außerhalb des Zylinders unterbringen zu können.

Die abzutastende Oberfläche bzw. Probe (21) ist hier Teil einer auf einer größeren Skala zylinderförmig gekrümmten Fläche (47). Die Drehachse (43), um welche das Objektiv drehbar angeordnet ist und der Krümmungsmittelpunkt der Zylinderfläche (47) fallen zusammen oder sind in geringem Abstand zueinander angeordnet. Symmetrie-Achse der Zylinderfläche und Drehachse (43) des Objektivs sind parallel oder annähernd parallel zueinander ausgerichtet. Die Oberflächennormale (49) an der Stelle, an welcher die optische Achse (11) die Zylinderfläche (47) durchtritt, können in einem Winkel (51) zueinander stehen. Die Abtastbewegung wird erfindungsgemäß durch schrittweise Drehung (45) des Objektivs (41) erreicht. Hierzu können äquidistante oder nicht-äquidistante Schritte für die Drehung (45) um die Drehachse (43) gewählt werden. Sind Geometrie und Winkelschritte bekannt, so können Position und Lage der einzelnen, im Objektraum (17) schrittweise abgetasteten Fokusebenen (15) berechnet werden. Durch die schrittweise Abtastung wird der Probenraum (17) mit einer Vielzahl von Schnittbildebenen durchsetzt.

In einem weiteren Schritt wird nun aus den aufgenommenen Schnittbildern das Oberflächenprofil bzw. die Höhen - Abweichung der Probenoberfläche von der Zylinderoberfläche (47) bzw. Zylinder-Hüllkurve ermittelt. Dies geschieht analog zu der in Fig. 5 für den Fall einer linearen Abtastbewegung dargestellten Prozedur. Entlang der jeweiligen Oberflächennormalen der Zylinderfläche werden wie in Fig. 5 gezeigt, Intensitätsverlaufsfunktionen (35) aus den Schnittbilddaten extrahiert und für jede der Intensitätsverlaufsfunktionen deren Peak bestimmt. Auf diese Weise lässt sich das Oberflächenprofil inklusive Rauheiten und Oberflächendefekten der zylinderförmig gekrümmten Oberfläche mit reduziertem technischen Aufwand der Anordnung bestimmen.

## Patentansprüche

1. Verfahren zur Gewinnung von dreidimensionalen Objektdaten einer Probenoberfläche unter Nutzung einer Vorrichtung zur optischen Schnittbildgenerierung,
**dadurch gekennzeichnet, dass**
für den Vorgang der Probenabtastung eine geradlinige Relativbewegung zwischen der konjugierten Probenebene und der Probe genutzt wird, wobei die Probenebene in Bezug auf die Richtung der Relativbewegung geneigt ist.

2. Verfahren zur Gewinnung von dreidimensionalen Objektdaten einer Probenoberfläche, unter Nutzung einer Vorrichtung zur optischen Schnittbildgenerierung,
**dadurch gekennzeichnet, dass**
für den Vorgang der Probenabtastung eine relative Drehbewegung zwischen der konjugierten Probenebene und der Probe genutzt wird, wobei die Drehachse der Relativbewegung sehr nahe an der Achse des zu untersuchenden Zylinders liegt oder mit ihr zusammen fällt.

3. Verfahren nach Anspruch 1 oder 2,
**dadurch gekennzeichnet, dass**
die genannte Relativbewegung zwischen Probenebene und Probe schrittweise oder kontinuierlich erfolgt.

4. Verfahren nach mindestens einem der vorangegangenen Ansprüche,
**dadurch gekennzeichnet, dass**
die vom Detektor in verschiedenen Positionen der Relativbewegung aufgenommenen Bilddaten zu Gruppen von jeweils mindestens zwei Elementen zusammengefasst werden und aus den Bilddaten einer Gruppe in einem Rechenschritt jeweils ein optisches Schnittbild berechnet wird.

5. Verfahren nach mindestens einem der vorangegangenen Ansprüche,
**dadurch gekennzeichnet, dass**
aus dem berechneten Satz von optischen Schnittbildern die Oberflächengestalt der Probe rekonstruiert wird.

6. Anordnung zur Gewinnung von dreidimensionalen Objektdaten entsprechend eines Verfahrens nach einem der Ansprüche 1 bis 5,
**dadurch gekennzeichnet, dass**
das verwendete Verfahren zur Erzeugung der optischen Schnittbilder auf Abbildung einer oder mehrere Beleuchtungsverteilungen mit Periodizität in mindestens einer Raumrichtung in eine Probenebene beruht, besagte eine oder mehrere Beleuchtungsverteilungen auf einen ortsauflösenden, optisch konjugiert zur Probenebene angeordneten Detektor abgebildet werden.

7. Anordnung nach Anspruch 6,
**dadurch gekennzeichnet, dass**
die Relativbewegung zwischen der strukturiert beleuchteten Probenebene und der Probe durch Bewegung der die Beleuchtungsverteilung erzeugenden Anordnung in Bezug auf die Probe und/oder die Bewegung der Probe in Bezug auf die Anordnung zur Erzeugung der Beleuchtungsverteilung realisiert ist.

8. Anordnung nach mindestens einem der Ansprüche 6 oder 7,
**dadurch gekennzeichnet, dass**
es sich bei dem vom Detektor registrierten Licht von der Probe um reflektiertes Licht und/oder gestreutes Licht und/oder Fluoreszenzlicht und/oder Lumineszenzlicht handelt.

9. Anordnung nach mindestens einem der Ansprüche 6 bis 8,
**dadurch gekennzeichnet, dass**
die Anordnung geeignete Mittel aufweist, um die Aufnahme von Bildinformationen durch den Detektor mit der genannten Relativbewegung oder/und mit einer stroboskopischen Beleuchtung der Probe zu synchronisieren.
